# EUROPEAN PATENT APPLICATION

(11) **EP 4 046 772 A1**
(43) Date of publication of application: **24.08.2022**
(21) Application number: 21158666.4
(22) Date of filing: 23.02.2021
(51) Int. Cl.: B29C 45/14, B62M 3/08, B29C 45/16, B29L 31/30, B29K 705/00, B29K 59/00, B29K 23/00

(54) **INTEGRALLY FORMED BEARING FREE PEDAL AND MANUFACTURING METHOD THEREOF**

(71) Applicant: VP Components Co., Ltd., Taiwan (TW)
(72) Inventor: LIN, Wen-Hwa, Taichung City (TW)
(74) Representative: Viering, Jentschura & Partner mbB Patent- und Rechtsanwälte

(57) **Abstract**

An integrally formed bearing free pedal (100) includes a central axle (20) and a pedal body (10). The pedal body (10) has a rotation axis (L), and is provided with an axle bore (11) formed along the rotation axis (L). The central axle (20) has an installation portion (21) and an opposite combination portion (22). The central axle (20) and the pedal body (10) are integrally molded. The combination portion (22) is disposed in the axle bore (11). A rotation gap (D) is formed between the periphery of the central axle (20) and the axle bore (11), so as to allow the central axle (20) to rotate with respect to the pedal body (10) along the rotation axis (L). Thus, the pedal (100) has no bearings and other related components, so as to be structurally simple, and the manufacturing cost is reduced.

## Description

### BACKGROUND OF THE INVENTION

### 1. Field of the Invention:

The present invention relates to pedals, and more particularly, to an integrally formed bearing free pedal and manufacturing method thereof.

### 2. Description of the Related Art:

Referring to Taiwan patent M367883, a bicycle pedal structure is disclosed, comprising a pedal body, a bearing, an axle tube, a pedal axle, and a nut. The pedal body is engaged on the axle tube through an injection molding process, with two ends of the axle tube provided with an axle seat, on which the bearing is disposed. The pedal axle passes through the bearing to be fastened by the nut.

The aforementioned patent meets the requirement of a reduced cost and a lightened weight. However, no matter whether the pedal body is directly injection molded on the axle tube or the axle tube is placed into the pedal body after it is injection molded, the manufacturing processes are relatively complicated, and the components of bearing and nuts are necessary, therefore failing to achieve the actual lightening and time saving effects. Improvement on those issues is desirable.

### SUMMARY OF THE INVENTION

To improve the issues above, an integrally formed bearing free pedal is disclosed, comprising only a pedal body and a central axle. Also, the pedal body and the central axle are integrally molded, such that the manufacturing process is simplified, and the cost of manufacturing is lowered.

For achieving the aforementioned objectives, an integrally formed bearing free pedal in accordance with an embodiment of the present invention is provided, which is formed of a pedal body and a central axle. The pedal body defines a rotation axis, and comprises an axle bore arranged along the rotation axis. The axle bore opens at one end of the pedal body. The central axle comprises an installation portion and a combination portion in opposite to the installation portion. The central axle and the pedal body are integrally formed in a mold. The combination portion is disposed in the axle bore, with a rotation gap formed between a periphery of the central axle and the axle bore, such that the rotation gap allows the central axle to rotate about the rotation axis with respect to the pedal body.

In another embodiment of the present invention, a manufacturing method of an integrally formed bearing free pedal is provided, comprising following steps: providing a central axle; placing the central axle into a manufacturing mold, and injecting a chemical material on an outer side of the central axle to form a pedal body, the pedal body comprising an axle bore, wherein the pedal body inlays the central axle in the axle bore; and, during a solidifying process of the pedal body, rotating the central axle in the axle bore for preventing the chemical material from adhering to a surface of the central axle, such that a rotation gap is formed between a periphery of the central axle and the axle bore after the pedal body is solidified.

Therefore, the present invention is integrally formed of only the pedal body and the central axle, saving the process of bearing installation and simplifying the manufacturing process, achieving the advantage of lowering the manufacturing cost.

### BRIEF DESCRIPTION OF THE DRAWINGS

**Fig. 1** is a perspective view of the bearing free pedal in accordance with an embodiment of the present invention.
**Fig. 2** is a sectional view of the bearing free pedal in accordance with an embodiment of the present invention.
**Fig. 3** is a first schematic view of the process of the manufacturing method of the bearing free pedal in accordance with an embodiment of the present invention, illustrating the central axle being placed into the first mold of the manufacturing mold.
**Fig. 4** is a second schematic view of the process of the manufacturing method of the bearing free pedal in accordance with an embodiment of the present invention, illustrating the inner layer member of the pedal body being injected on an outer side of the central axle.
**Fig. 5** is a third schematic view of the process of the manufacturing method of the bearing free pedal in accordance with an embodiment of the present invention, illustrating the semi-finished product of the central axle and the pedal body in a second mold, and the drive unit driving the central axle to rotate with respect to the pedal body.
**Fig. 6** is a fourth schematic view of the process of the manufacturing method of the bearing free pedal in accordance with an embodiment of the present invention, illustrating the semi-finished product of the central axle and the pedal body in a third mold, and the outer layer member being injected on an outer side of the inner layer member.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion. Embodiments of the present invention are illustrated in detail along with the drawings. However, the technical features included by the present invention are not limited to certain embodiments hereby provided. Scope of the present invention shall be referred to the claims, which include all the possible replacements, modifications, and equivalent features.

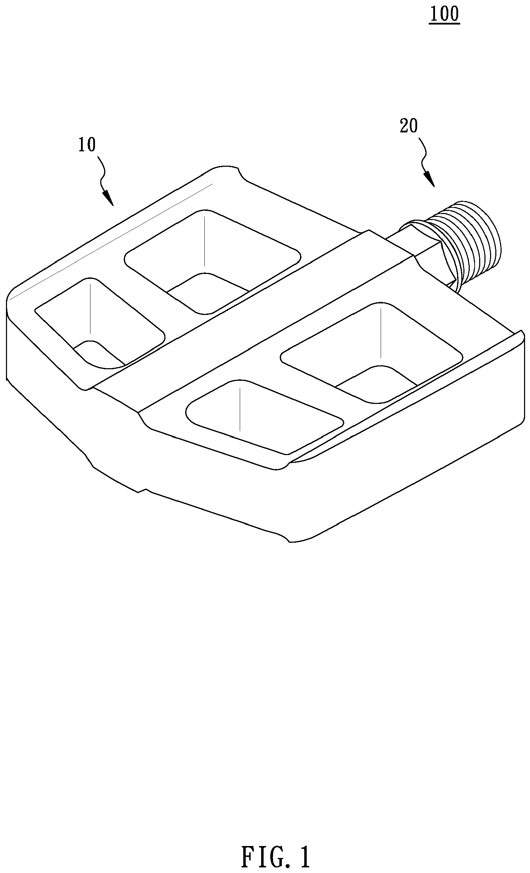

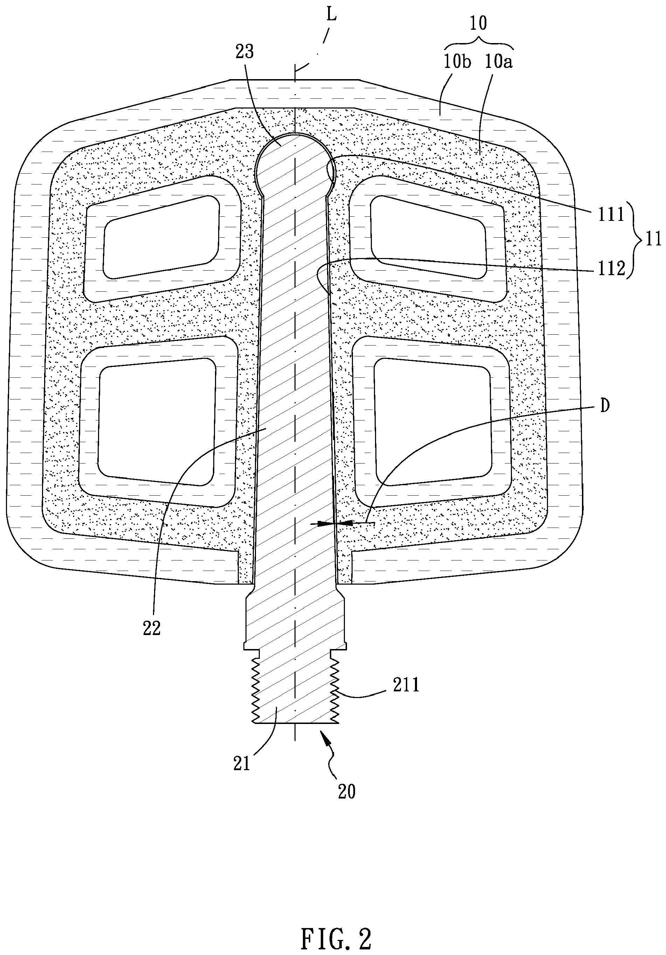

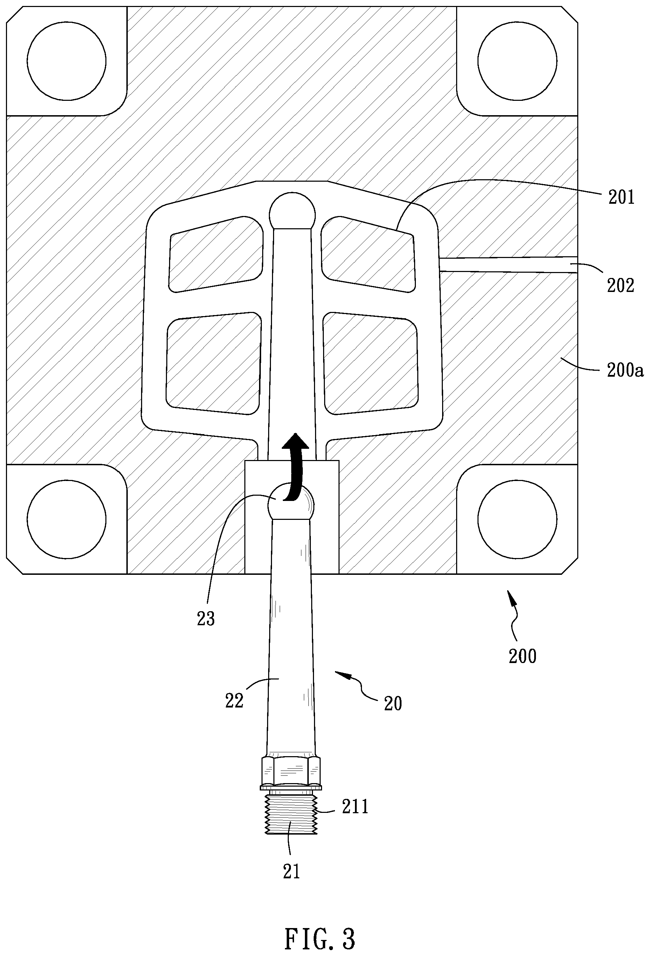

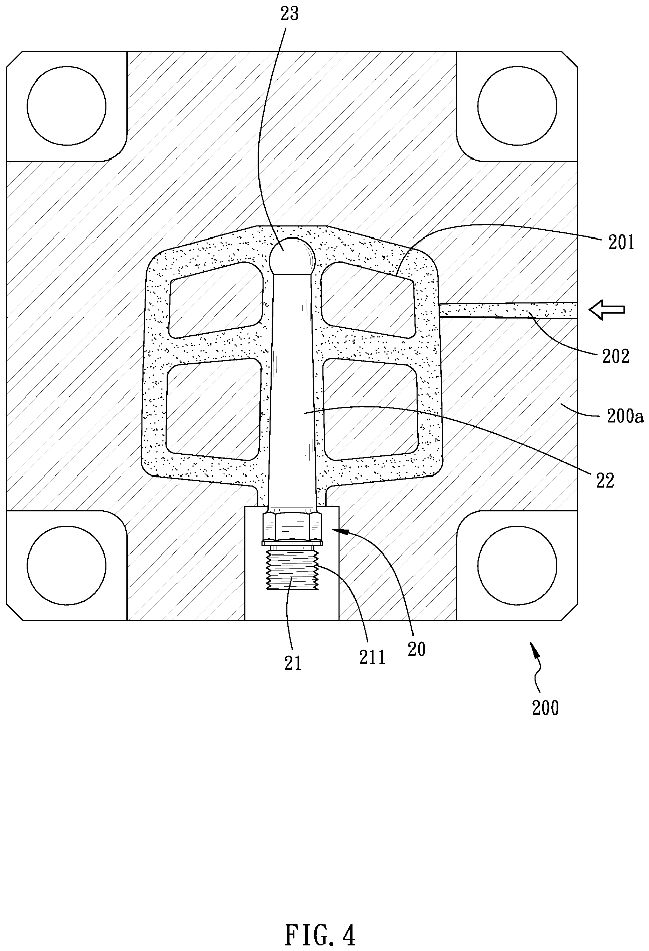

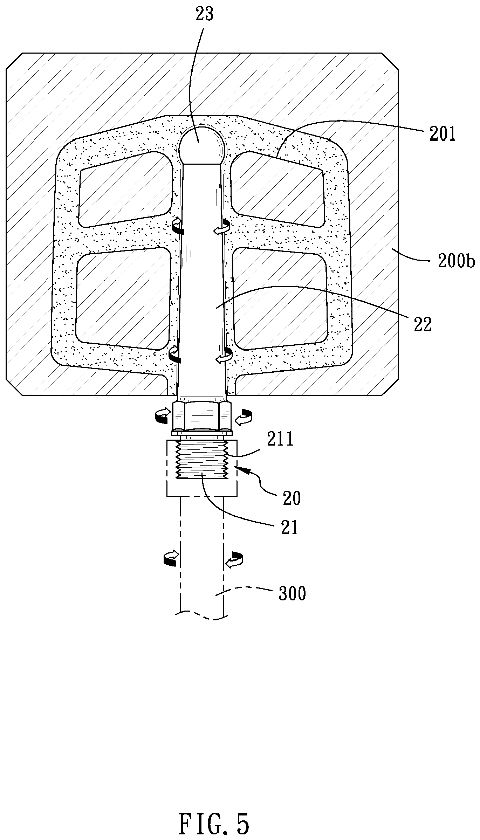

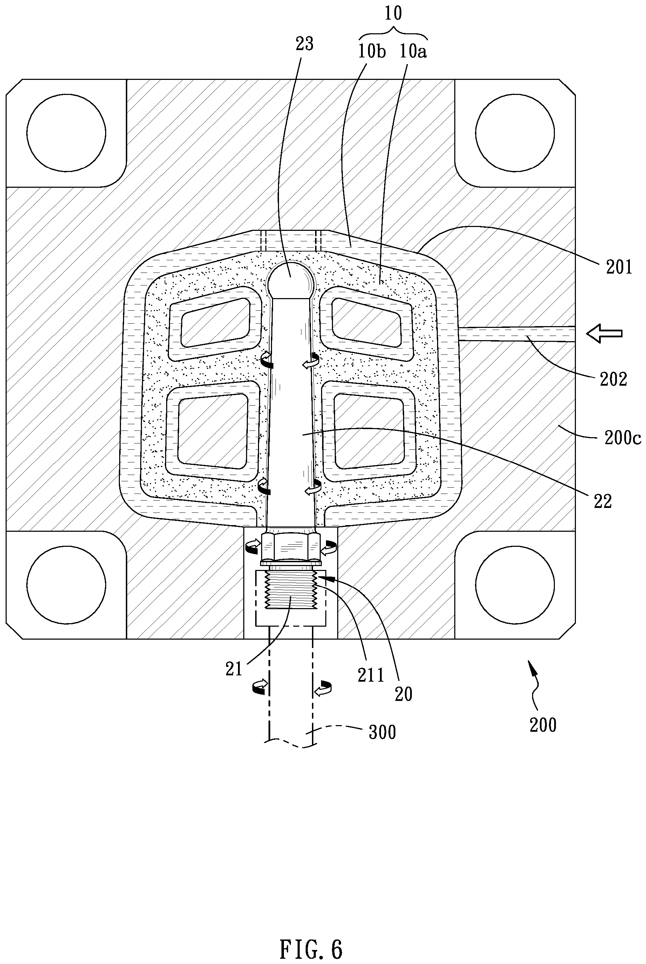

Referring to **Fig.1 to Fig. 6**, the present invention provides an integrally formed bearing free pedal **100** comprising a pedal body **10** and a central axle **20**, without a bearing and other relevant components. The bearing free pedal **100** is allowed to be installed on the crank of a bicycle, so that the rider imposes force with foot for pedaling the bearing free pedal **100.**

The pedal body defines a rotation axis **L**, and comprises an axle bore **11** formed along the rotation axis **L**. One end of the axle bore **11** in the pedal body **10** is open, wherein the axle bore **11** comprises an inner section **111** and an outer section **112.** The inner section **111** is sealed and not exposed. One part of the outer section **112** away from the inner section **111** is open.

The central axle **20** comprises an installation portion **21** and a combination portion **22** in disposed in opposite to the installation portion **21.** The installation portion **21** comprises a thread **211** and allowed to be installed on the crank of the bicycle. The central axle **20** has a block portion **23** disposed on the combination portion **22.** In the embodiment, the profile size of the block portion **23** is larger than the profile size of the combination portion **22.** The block portion **23** is formed in a semi-sphere shape and integrally formed on a distal end of the central axle **20.** Also, the combination portion **22** tapers from the installation portion **21** toward the block portion **23**, such that the central axle **20** is provided with a certain degree of structural strength, and the pedal **100** of the present invention is thereby lightened at the same time.

In the embodiment, the central axle **20** and the pedal body **10** are integrally formed in the mold, such that the combination portion **22** is disposed in the axle bore **11.** Therein, the pedal body **10** is injection molded with chemical material to inlay the central axle in the axle bore **11.** Also, in the solidification process of the pedal body **10**, the central **20** rotates about the rotation axis **L** in the axle bore **11** with respect to the pedal body **10**, so as to form a rotation gap **D** between the periphery of the central axle **20** and the axle bore **11**, whereby the chemical material is prevented from adhering to the surface of the central axle **20** before completely solidified. Therefore, after the molding of the pedal body **10** and the central axle **20**, the rotation gap **D** allows the central axle **20** to freely rotate about the rotation axis **L** with respect to the pedal body **10.**

After the pedal **100** is solidified, the profile of the combination portion **22** matches the outer section **112**, and the profile of the block portion **23** matches the inner section **111**, such that the central axle **20** will not be detached from the axle bore **11.** In another embodiment, the shape of the block portion **23** is allowed to be other irregular shapes, as long as the shape of the block portion **23** does not affect the rotation of the central axle **20** with respect to the pedal body **10.**

In another embodiment, the pedal body **10** comprises an inner layer member **10a** and an outer layer member **10b.** When the inner layer member **10a** is integrally formed with the central axle **20**, the outer layer member **10b** is then injection molded on the outer side of the inner layer member **10a**, wherein the inner layer member **10a** is formed of a low-friction chemical material, such as polyoxymethylene (POM), and the outer layer member **10b** is formed of polypropylene (PP). Also, the outer layer member **10b** is allowed to be manufactured into a predetermined shape according to different demands. In other embodiments, the outer layer member **10b** can be provided with non-slip protrusion points, so as to prevent the foot of the user from accidentally slipping with respect to the pedal **100.**

With the foregoing configuration, the pedal body **10** and the central axle **20** are integrally formed in the mold, wherein the central axle **20** is able to freely rotate with respect to the pedal body **10**, and no bearing (self-lubricating bearing) and related components are needed between the pedal body **10** and the central axle **20.** In other words, only two components are needed to form the bearing free pedal **100**, so that the cost time and cost of manufacturing and assembling are significantly reduced, thereby providing customers with a low cost pedal **100** product.

For realizing the aforementioned bearing free pedal **100**, a manufacturing method of the bearing free pedal **100** in accordance with the present invention is provided, comprising following steps.

Provide a central axle **20.** The central axle **20** is formed of an iron material and provided with a smooth surface.

Place the central axle **20** into a manufacturing mold **200**, and inject a chemical material on an outer side of the central axle **20** to form a pedal body **10.** The pedal body **10** comprises an axle bore **11.** The shape of the axle bore **11** matches the shapes of the combination portion **22** and the block portion **23** of the axle **20**, so that the pedal body **10** inlays the central axle **20** in the axle bore **11.** Therein, the pedal body **10** comprises an inner layer member **10a** and an outer layer member **10b.** The manufacturing mold **200** is disposed on the injection molding machine, such as a two-color injection molding machine or a three-color injection molding machine. The manufacturing mold **200** can comprise a first mold **200a**, a second mold **200b**, and a third mold **200c.** During a solidifying process, the central axle **20** is moved to the first mold **200a**, and a first injection step is carried out for injecting the chemical material of POM through the injection channel **202** into the mold cavity **201**, such that the inner layer member **10a** is formed on the outer side of the central axle **20.**

Next, during the solidification process of the inner layer member **10a** of the pedal body **10**, the not yet solidified inner layer member **10a** and the central axle **20** are moved into the second mold **200b** and imposed with a cooling down measure, whereby the inner layer member **10a** of the pedal body **10** is cooled down to a temperature between 40°C to 60°C, such that the inner layer member **10a** is in a nearly solidified status. Next, a drive unit **300**, such as a motor having a force output axle, is applied for driving the central axle **20** to rotate with a predetermined rate in the axle bore **11**, so as to prevent the chemical material from adhering to a surface of the central axle **20** before complete solidification. When the inner layer member **10a** of the pedal body **10** is completely solidified, a rotation gap **D** will be formed between the periphery of the central axle **20** and the axle bore **11**, wherein the rotation gap **D** is between 0.15 to 0.3 mm, such as 0.2 mm. Additionally, before the central axle **20** is placed into the manufacturing mold **200**, a high temperature tolerant grease can be applied between the surface of the central axle **20** and the pedal body, facilitating the rotation of the central axle **20** with respect to the pedal body **10.**

Then, the solidified inner layer member **10a** and the central axle **20** are moved to the third mold **200c**, and, in a second injection step, a PP material is injected to form the outer layer member **10b** which contains the inner layer member **10a** therein. In the third mold **200c**, the central axle **20** rotates with respect to the axle bore 11 to the pedal body **10** until the pedal **10** is solidified and the mold is opened, thus completing the manufacturing process of the integrally formed bearing free pedal **100.** Therein, the amount of molds in the present invention is only for illustration instead of limiting the present invention. Thus, in other embodiments of the present invention, the pedal body **10** is allowed to be in a single layer structure, so that the pedal **100** is manufactured with only one mold during the molding process.

In another embodiment, after the inner layer member **10**a is initially molded in the first mold **200a**, when the first mold **200a** is slightly opened and the inner layer member **10a** is ready to be moved to the second mold **200b**, an air blowing measure is allowed to be applied for cooling the temperature of the inner layer member **10a.** Also, the air blowing measure facilitates the formation of the interval distance between the inner layer member **10a** and the axle bore **20**, so as to prevent the chemical material from adhering to the central axle **20.** Therein, the air blowing measure can also be applied for cooling down the pedal body **10** in the second mold **200b** and the third mold **200c.**

In another embodiment of the present invention, before the central axle **20** is placed into the manufacturing mold **200**, an examination step can be applied for identifying if the thread of the thread **211** is structurally correct. The examination step can be achieved by cooperation of an automatic feeding machine and an examination machine. After the examination, an automatic feeding machine is able to automatically feeding the central axle **20** into the manufacturing mold **200** for injection molding, and an automatic retrieving mechanism can be applied for taking out and packaging the molded product, achieving an automatic production.

Therefore, the integrally formed bearing free pedal **100** and manufacturing method thereof have following advantages.

The bearing free pedal **100** is formed of only the pedal body **10** and the central axle **20.** With a rotation gap **D** between the central bore **20** and axle bore **11** of the pedal body **10**, the central axle **20** is allowed to freely rotate with respect to the pedal body **10**, without the need of a bearing and other related lubricating components. Thus, the overall structure is simplified, and the overall weight is lightened.

The bearing free pedal **100** is formed of the pedal body **10** and the central axle **20** that are integrally molded. The manufacturing process is simple. No man power is needed for assembling complicated components. Therefore, the cost of manufacturing of the product is effectively reduced.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An integrally formed bearing free pedal (100) comprising a pedal body (10) and a central axle (20), **characterized in**:
the pedal body (10) defining a rotation axis (L) and comprising an axle bore (11) formed along the rotation axis (L), with one end of the axle bore (11) on the pedal body (10) being open; and
the central axle (20) comprising an installation portion (21) and a combination portion (22) disposed in opposite to the installation portion (21), the central axle (20) and the pedal body (10) being integrally formed in a mold, the combination portion (22) disposed in the axle bore (11), a rotation gap (D) formed between a periphery of the central axle (20) and the axle bore (11), the rotation gap (D) allowing the central axle (20) to rotate about the rotation axle (L) with respect to the pedal body (10).

2. The pedal (100) of claim 1, wherein the pedal body (10) is injection molded to inlay the central axle (20) in the axle bore (11); during a solidification of the pedal body (10), the central axle (20) rotates about the rotation axis (L) in the axle bore (11) with respect to the pedal body (10), such that the rotation gap (D) is formed between the periphery of the central axle (20) and the axle bore (11).

3. The pedal (100) of claim 2, wherein the central axle (20) comprises a block portion (23) disposed on the combination portion (22), such that the central axle (20) is not detached from the axle bore (11).

4. The pedal (100) of claim 3, wherein the block portion (23) is integrally formed on a distal end of the central axle (20) away from the installation portion (21); the axle bore (11) comprises an inner section (111) and an outer section (112); the inner section (111) is sealed and not exposed; the block portion (23) blocks the inner section (111); the combination portion (22) matches the outer section (112).

5. The pedal (100) of claim 4, wherein a profile of the combination portion (22) matches with a shape of the outer section (112), and a profile of the block portion (23) matches a shape of the inner section (111); a size of the block portion (23) is larger than a size of the combination portion (22).

6. The pedal (100) of claim 5, wherein the installation portion (21) comprises a thread (211); the combination portion (22) tapers from the installation portion (21) toward the block portion (23), and the block portion (23) is formed in a semi-sphere shape.

7. The pedal (100) of claim 6, wherein the pedal body (10) comprises an inner layer member (10a) and an outer layer member (10b); after the inner layer member (10a) and the central axle (20) are integrally formed, the outer layer member (10b) is injected on an outer side of the inner layer member (10a); the inner layer member (10a) is formed of an injection of a low friction chemical material; the outer layer member (10b) is formed of an injection of a PP material.

8. A method of an integrally formed bearing free pedal (100), comprising following steps:
providing a central axle (20);
placing the central axle (20) into a manufacturing mold (200), and injecting a chemical material on an outer side of the central axle (200) to form a pedal body (10), the pedal body (10) comprising an axle bore (11), wherein the pedal body (10) inlays the central axle (20) in the axle bore (11); and
during a solidifying process of the pedal body (10), rotating the central axle (20) in the axle bore (11) for preventing the chemical material from adhering to a surface of the central axle (20), such that a rotation gap (D) is formed between a periphery of the central axle (20) and the axle bore (11) after the pedal body (10) is solidified.

9. The manufacturing method of claim 8, wherein the central axle (20) comprises an installation portion (21) and a combination portion (22) disposed in opposite to the installation portion (21), and the central axle (20) comprises a block portion (23) disposed on the combination portion (22), such that the central axle (20) is not detached from the axle bore (11).

10. The manufacturing method of claim 9, wherein the pedal body (10) comprises an inner layer member (10a) and an outer layer member (10b); the inner layer member (10a) is formed through a first injection step on an outer side of the central axle (20), and the outer layer member (10b) is formed through a second injection step and inlays the inner layer member (10a) therein; the inner layer member (10a) is formed of an injection of a low friction chemical material; the outer layer member (10b) is formed of an injection of a PP material.

11. The manufacturing method of claim 10, wherein the manufacturing mold (200) comprises a first mold (200a), a second mold (200b), and a third mold (200c); the first injection step is carried out in the first mold (200a), after which the inner layer member (10a) and the central axle (20) are move into the second mold (200b); a drive unit (300) is applied for rotating the central axle (20) with respect to the axle bore (11), after which the inner layer member (10a) and the central axle (20) are moved into the third mold (200c); the second injection step is carried out in the third mold (200c).

12. The manufacturing method of claim 11, wherein, in the third mold (200c), the drive unit (300) is applied for driving the central axle (20) to rotate with respect to the axle bore (11) unit the pedal body (10) is solidified.

13. The manufacturing method of claim 8, wherein, before the central axle (20) rotates with respect to the axle bore (11), the pedal body (10) is cooled down to a temperature between 40°C to 60°C; the rotation gap (D) ranges from 0.15 mm to 0.3 mm.

14. The manufacturing method of claim 9, wherein the central axle (20) comprises an installation portion (21) and a combination portion (22) disposed in opposite to the installation portion (21); the installation portion (21) is a thread; before the central axle (20) is placed into the manufacturing mold (200), the central axle (20) is examined through an examination step to identify if the thread is structurally correct.
